# EUROPÄISCHE PATENTSCHRIFT

(11) **EP 1 668 926 B1**
(45) Veröffentlichungstag und Bekanntmachung des Hinweises auf die Patenterteilung: **07.04.2010**
(21) Anmeldenummer: 04787030.8
(22) Anmeldetag: 28.09.2004
(51) Int. Cl.: H04Q 1/14

(54) **SPLITTEREINRICHTUNG FÜR EINE VERTEILEREINRICHTUNG EINER TELE KOMMUNIKATIONSANLAGE**
SPLITTER DEVICE FOR A DISTRIBUTION UNIT OF A TELECOMMUNICATION SYSTEM
DISPOSITIF DE SEPARATION POUR SYSTEME DE DISTRIBUTION D'UNE INSTALLATION DE TELECOMMUNICATION

(30) Priorität: 30.09.2003 DE 20315191 U
(43) Veröffentlichungstag der Anmeldung: 14.06.2006
(73) Patentinhaber: CCS Technology, Inc., Wilmington, DE 19803 (US)
(72) Erfinder: HOFFMANN, Wolfgang, 58097 Hagen (DE); VOGT, Rainer, 45897 Gelsenkirchen (DE); LIPKOWSKI, Marc, 58638 Iserlohn (DE)
(74) Vertreter: Sturm, Christoph
(86) Internationale Anmeldenummer: PCT/EP2004/010828
(87) Internationale Veröffentlichungsnummer: WO 2005/034533

(56) Entgegenhaltungen:
- WO-A-2004/032533
- DE-A1- 10 029 870

## Beschreibung

Die Erfindung betrifft eine Sptittereinrichtung für eine Verteilereinrichtung einer Telekommunikationsanlage gemäß dem Oberbegriff des Patentanspruchs 1.

Die gleichzeitige Nutzung von hohen Frequenzen zur Übertragung von Datensignalen und von niedrigen Frequenzen zur Übertragung von Stimmsignalen bzw. Sprachsignalen über eine Kupferdoppelader setzt bei bestimmten DSL-Telekommunikationsdiensten die Verwendung eines sogenannten Splitters voraus. Bei solchen splittergebundenen DSL-Telekommunikationsdiensten handelt es sich zum Beispiel um ADSL oder VDSL.

Aus der DE 100 29 870 A1 sind Splittereinrichtungen für Verteilereinrichtungen einer Telekommunikationsanlage bekannt, die zur Nutzung von DSL-Telekommunikationsdiensten mit Funktionselementen (Trennelementen bzw. Schaltelementen) einer Verteilerleiste eines Verteilerblocks zusammenwirken. So ist es aus diesem Stand der Technik bereits bekannt, Splittereinrichtungen auf einer sogenannten Backplane einer Aufnahmewanne eines Verteilerblocks, anzuordnen. Weiterhin schlägt die DE 100 29 870 A1 eine Anordnung vor, bei welcher Splittereinrichtungen von hinten in die Funktionselemente einer Verteilerleiste einsteckbar sind, wobei dann die auf der Vorderseite der Funktionselemente angeordneten Schneidklemmen und damit die Kontaktfedern innerhalb der Funktionselemente frei zugänglich bleiben. Weiterhin offenbart die DE 100 29 870 A1 als Einzelstecker oder Mehrfachstecker ausgebildete Splittereinrichtungen, die von vorne in die Funktionselemente einer Verteilerleiste einsteckbar sind. Dies erfolgt dadurch, dass die als Einzelstecker oder als Mehrfachstecker ausgebildete Splittereinrichtung mit Kontaktzungen von der Vorderseite her in die entsprechenden Funktionselemente der Verteilerleiste, nämlich zwischen die Kontaktfedern der entsprechenden Trennelemente bzw. Schaltelemente, eingeschoben wird.

Bei von vorne in Funktionselemente einer Verteilerleiste eingesteckten Splittereinrichtungen, die entweder als Einzelstecker oder als Mehrfachstecker ausgebildet sind, besteht das Problem, dass bei in die Verteilerleiste eingesteckter Splittereinrichtung zu Messzwecken oder Prüfzwecken nicht mehr auf die Kontaktfedern der entsprechenden Funktionselemente zugegriffen werden kann. Soll demnach bei Verwendung der aus dem Stand der Technik bekannten, von vorne in die Funktionselemente einer Verteilerleiste einsteckbaren Splittereinrichtungen zu Messzwecken oder Prüfzwecken auf einzelne Kontaktfedern der entsprechenden Funktionselemente zugegriffen werden, so müssen die Splittereinrichtungen aus ihrer Steckposition entfernt und aus der Verteilerleiste herausgezogen werden.

Aus dem nachveröffenttichten WO 2004/032533 A1, einem Stand der Technik der nach Art. 54(3) EPÜ nur für die Neuheitsprüfung relevant ist, ist eine Splittereinrichtung bekannt, in die mindestens ein Signalabgriffsmittel integriert ist, um an dem oder jedem Splitter anliegende Signale abzugreifen.

Hiervon ausgehend liegt der vorliegenden Erfindung das Problem zu Grunde, eine neuartige Splittereinrichtung für eine Verteilereinrichtung einer Telekommunikationsanlage zu schaffen.

Dieses Problem wird durch eine Splittereinrichtung mit den Merkmalen des Patentanspruchs 1 gelöst. Erfindungsgemäß ist in die Splittereinrichtung zusätzlich mindestens ein Schaltmittel integriert, um an dem oder jedem Splitter anliegende Signale bzw. Telekommunikationsdienste zuzuschalten und/oder abzuschalten und/oder durchzuschalten.

Hierdurch ist es möglich, einzelne Dienste ganz auszublenden oder mit anderen Diensten zu kombinieren um so erweiterte Mess- und Prüfmöglichkeiten bereitzustellen.

Vorzugsweise ist das oder jedes Schaltmittel fernsteuerbar ausgebildet. Dies kann zum Beispiel über fernsteuerbare Relais erzielt werden, wobei Steuerungssignale für die Relais im Modulationsverfahren über dieselbe Kupferdoppelader übertragen werden wie die Telekommunikationsdienste.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1:: eine erfindungsgemäße Splittereinrichtung nach einem ersten Ausführungsbeispiel der Erfindung in einer perspektivischen Seitenansicht,
- Fig. 2:: die Splittereinrichtung gemäß Fig. 1 mit entferntem Gehäuse,
- Fig. 3:: die Splittereinrichtung gemäß Fig. 1 in einer in eine Verteilerleiste einer Verteilereinrichtung von vorne eingesteckten Position in perspektivischer Seitenansicht,
- Fig. 4:: die Anordnung gemäß Fig. 3 in Vorderansicht,
- Fig. 5:: ein Schaltmittel der Splittereinrichtung gemäß Fig. 1 in Alleindarstellung,
- Fig. 6:: ein Signalabgriffsmittel der Splittereinrichtung gemäß Fig. 1 in Alleindarstellung,
- Fig. 7:: das Signalabgriffsmittel der Splittereinrichtung gemäß Fig. 6 zusammen mit einem in das Signalabgriffsmittel einsteckbaren Stecker,
- Fig. 8:: eine erste mögliche interne Verschaltung für die Splittereinrichtung gemäß Fig. 1,
- Fig. 9:: eine zweite mögliche interne Verschaltung für die Splittereinrichtung gemäß Fig. 1,
- Fig. 10:: eine dritte mögliche interne Verschaltung für die Splittereinrichtung gemäß Fig. 1,
- Fig. 11:: eine erfindungsgemäße Splittereinrichtung nach einem zweiten Ausführungsbeispiel der Erfindung in einer perspektivischen Seitenansicht,
- Fig. 12:: eine erfindungsgemäße Splittereinrichtung nach einem dritten Ausführungsbeispiel der Erfindung in einer perspektivischen Seitenansicht,
- Fig. 13:: eine erfindungsgemäße Splittereinrichtung nach einem vierten Ausführungsbeispiel der Erfindung in einer perspektivischen Seitenansicht, und
- Fig. 14:: eine erfindungsgemäße Splittereinrichtung nach einem weiteren Ausführungsbeispiel der Erfindung in einer perspektivischen Seitenansicht.

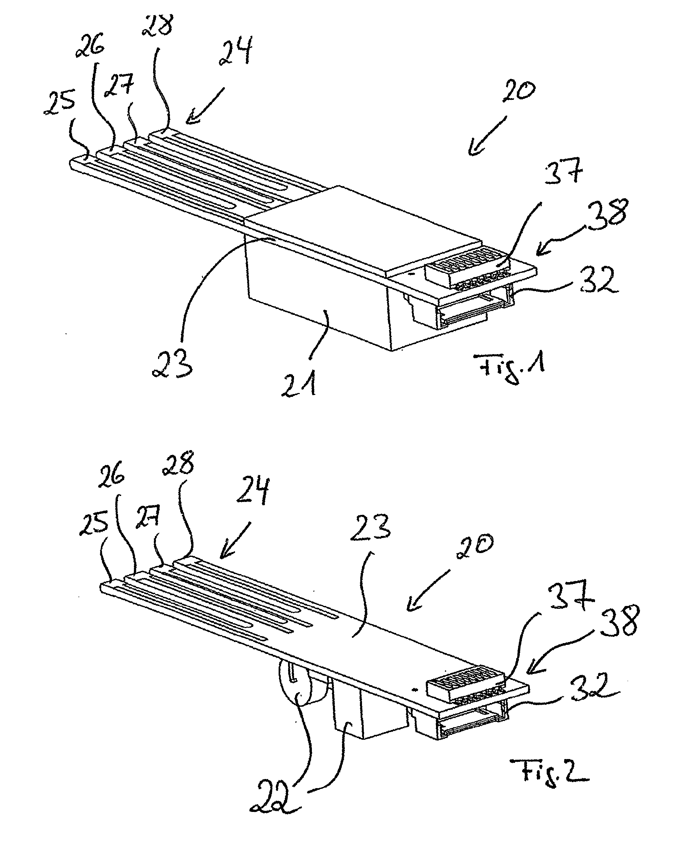

Nachfolgend wird die hier vorliegende Erfindung unter Bezugnahme auf Fig. 1 bis 14 in größerem Detail beschrieben.

Fig. 1 und 2 zeigen ein bevorzugtes Ausführungsbeispiel einer erfindungsgemäßen Splittereinrichtung 20, wobei die Splittereinrichtung 20 gemäß Fig. 1 und 2 als Einzelstecker bzw. als Einzelsplitter ausgebildet ist. Fig. 1 zeigt die Splittereinrichtung 20 zusammen mit einem Gehäuse 21, das um die aktiven und/oder passiven Bauelemente 22 zur Bildung des eigentlichen Splitters angeordnet ist. In Fig. 2 ist das Gehäuse 21 entfernt, so dass der Blick auf die aktiven und/oder passiven Bauelemente 22 des eigentlichen Splitters freigegeben ist.

Die Splittereinrichtung 20 gemäß Fig. 1 und 2 umfasst eine Platine 23. An einem ersten Ende 24 der Platine 23 sind im gezeigten Ausführungsbeispiel insgesamt vier Kontaktzungen 25, 26, 27 und 28 ausgebildet. Jede dieser Kontaktzungen 25, 26, 27 und 28 stellt je zwei Anschlussmöglichkeiten bzw. Kontaktmöglichkeiten bereit, eine erste Kontaktmöglichkeit auf der Oberseite und eine zweite Kontaktmöglichkeit auf der Unterseite der jeweiligen Kontaktzunge 25, 26, 27 bzw. 28. Mit den vier Kontaktzungen 25, 26, 27 und 28 werden demnach insgesamt acht Anschlussmöglichkeiten bereitgestellt. Zwei dieser Anschlussmöglichkeiten dienen der Kontaktierung der sogenannten a-Ader sowie b-Ader des hochfrequenten Datensignals (DATA/DSLAM), zwei Anschlussmöglichkeiten dienen der Kontaktierung der a-Ader sowie b-Ader des niederfrequenten Stimmsignals bzw. Sprachsignals (VOICE/POTS/ISDN), zwei weitere Anschlussmöglichkeiten dienen der Kontaktierung von a-Ader sowie b-Ader des kombinierten Sprach-Datensignals (LINE) und die beiden anderen Anschlussmöglichkeiten dienen der Bereitstellung eines Massepotentials bzw. Erdpotentials (SHIELD). An dieser Stelle sei darauf hingewiesen, dass die a-Adern des hochfrequenten Datensignals, des niederfrequenten Stimmsignals sowie des kombinierten Sprach-Datensignals auch als "Tip" und die b-Ader auch als "Ring" bezeichnet werden. Prinzipiell wäre es ausreichend, die Splittereinrichtung 20 mit sieben Anschlussmöglichkeiten bzw. Kontaktmöglichkeiten zu versehen, da das Erdpotential bzw. Massepotential der Splittereinrichtung 20 lediglich einmal zur Verfügung gestellt werden braucht.

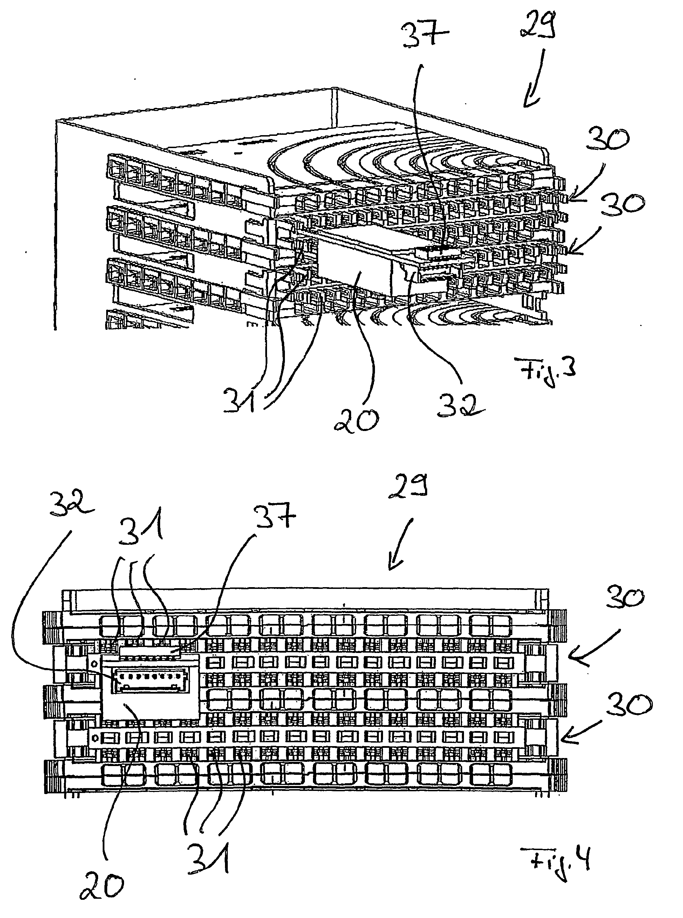

Mit den Kontaktzungen 25, 26, 27 und 28 ist die als Einzelsplitter ausgebildete Splittereinrichtung 20 von vorne in ein als Trennelement bzw. Schaltelement ausgebildetes Funktionselement einer Verteilerleiste einer Verteilereinrichtung einsteckbar. Fig. 3 und 4 zeigen eine als Verteilerblock 29 ausgebildete Verteilereinrichtung einer Telekommunikationsanlage, in der sandwichartige übereinander mehrere Verteilerleisten 30 angeordnet sind. In jede Verteilerleiste 30 sind mehrere Funktionselemente (Trennelemente bzw. Schaltelemente) integriert, wobei Schneidklemmen 31 an einer Vorderseite der Verteilerleiste 30 angeordnet sind, und im Inneren der Verteilerleiste in nicht gezeigte Kontaktfedern der Funktionselemente übergehen. Die Splittereinrichtung 20 ist gemäß Fig. 3 und 4 von vorne in ein Funktionselement einer Verteilerleiste 30 einsteckbar, wobei die Kontaktzungen 25, 26, 27 und 28 nach Einschieben der Splittereinrichtung 20 in ein Funktionselement die Kontaktfedern im Inneren des jeweiligen Funktionselements kontaktieren.

Im Sinne der hier vorliegenden Erfindung ist in die Splittereinrichtung 20 ein Signalabgriffsmittel 32 integriert. Mithilfe des Signalabgriffsmittels 32, das im Ausführungsbeispiel gemäß Fig. 1 und 2 als Buchse einer Steckverbindung ausgebildet ist, sind die an der Splittereinrichtung 20 bzw. an den Bauelementen 22 des Splitters anliegenden Signale bzw. Telekommunikationsdienste abgreifbar und einer nicht-dargestellten Auswerteeinrichtung zuführbar, ohne die Splittereinrichtung 20 aus dem Funktionselement herausziehen zu müssen. Über die Signalabgriffsmittel 32 ist demnach auch bei in ein Funktionselement eingesteckter Splittereinrichtung 20 auf die Kontaktfedern des entsprechenden Funktionselements zugreifbar. Damit werden Messungen und Test- sowie Prüfvorgänge bei von vorne in ein Funktionselement eingesteckter Splittereinrichtung 20 und damit während des Betriebs der Splittereinrichtung 20 möglich.

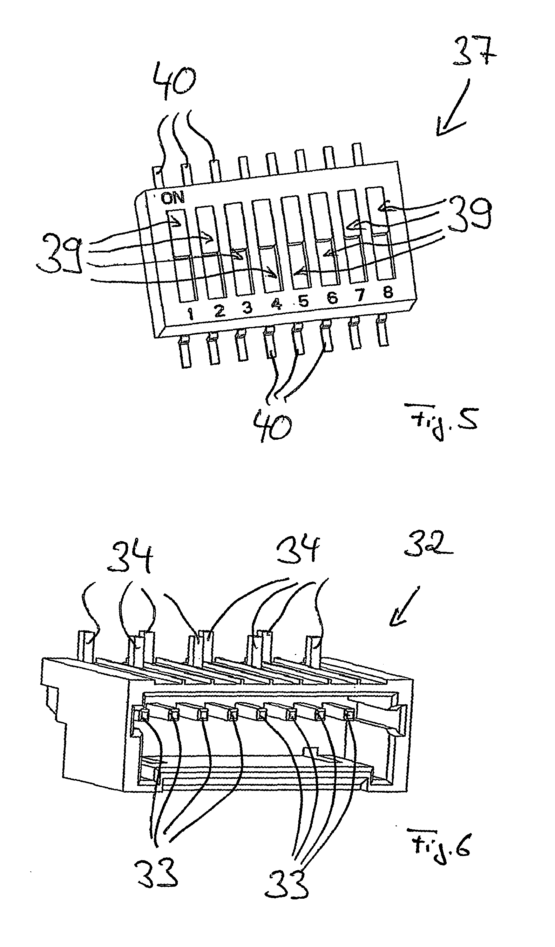

Fig. 6 zeigt das als Buchse einer Steckverbindung ausgebildete Signalabgriffsmittel 32 der Splittereinrichtung 20 in Alleindarstellung. In das Signalabgriffsmittel 32 sind insgesamt acht Kontaktpins 33 integriert, wobei an den Kontaktpins 33 die an den Kontaktzungen 25, 26, 27 und 28 anliegenden Signale abgegriffen werden können. In Fig. 6 dargestellte, gegenüber den Kontaktpins 33 um 90° abgewinkelte Anschlüsse 34 dienen dem Anschluss des Signalabgriffsmittels 32 auf der Platine 23 der Splittereinrichtung 20 und der Kontaktierung entsprechender, in die Platine 23 integrierter Leiterbahnen, an welchen die an den Kontaktzungen 25, 26, 27 und 28 anliegenden Signale abgegriffen werden können.

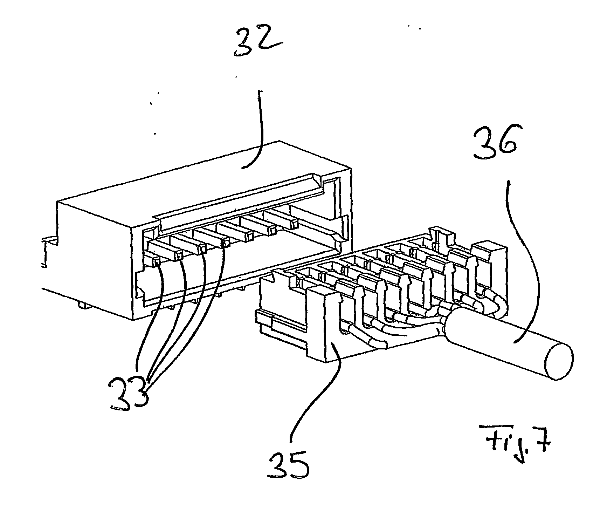

In das als Buchse ausgebildete Signalabgriffsmittel 32 ist ein entsprechend ausgebildeter Stecker 35 einsteckbar. Fig. 7 zeigt einen Stecker 35 in Verbindung mit dem Signalabgriffsmittel 32, wobei mithilfe des am Stecker 35 angreifenden Kabels 36 letztendlich die an den Kontaktpins 33 bereitgestellten Signale bzw. Dienste an eine Auswerteeinrichtung übertragen werden können.

Im Sinne der hier vorliegenden Erfindung ist in die Splittereinrichtung 20 zusätzlich zu dem Signalabgriffsmittel 32 ein Schaltmittel 37 integriert. Das Schaltmittel 37 ist ebenso wie das Signalabgriffsmittel 32 einem dem Ende 24 gegenüberliegenden Ende 38 der Platine 23 zugeordnet. Mithilfe des Schaltmittels 37 sind an der Splittereinrichtung 20 bzw. dem Splitter anliegende Signale selektiv zuschaltbar und/oder abschaltbar und/oder durchschaltbar. Hierdurch ist es möglich, zu Prüfzwecken oder Messzwecken den Zugriff auf die an der Splittereinrichtung 20 anliegenden Signale zu beeinflussen. Es ist eine Durchschaltung eines oder mehrerer Dienste, eine Verbindung eines oder mehrerer Dienste mit mindestens einem anderen Dienst sowie eine Abschaltung eines oder mehrerer Dienste möglich. Damit lassen sich die an den Kontaktzungen 25, 26, 27 und 28 bereitgestellten Dienste für Prüfzwecke und Messzwecke nahezu beliebig miteinander kombinieren und in entsprechender Kombination am Signalabgriffsmittel 32 bereitstellen. Hierauf wird weiter unten in größerem Detail eingegangen.

Im Ausführungsbeispiel gemäß Fig. 1 und 2 ist das Schaltmittel 37 als sogenannter DIP-Schalter ausgebildet. Fig. 5 zeigt das als DIP-Schalter ausgebildete Schaltmittel 37 in Alleindarstellung. So verfügt der DIP-Schalter gemäß Fig. 5 über insgesamt acht Einzelschalter 39, wobei jeder der Einzelschalter 39 für sich geöffnet oder geschlossen werden kann. In Fig. 5 sind alle Einzelschalter 39 in der sogenannten ON-Position gezeigt, also geschlossen. Über Kontaktfüße 40 ist das als DIP-Schalter ausgebildete Schaltmittel 37 an die entsprechenden Leiterbahnen der Platine 23 anschließbar.

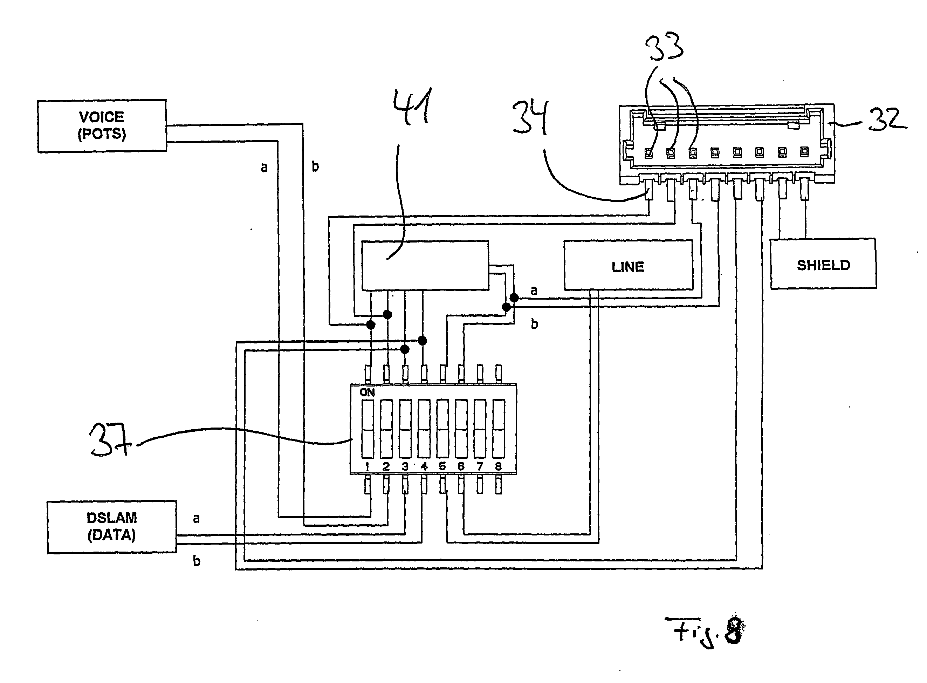

Fig. 8 zeigt eine erste Möglichkeit zur internen Verschaltung des in die Splittereinrichtung 20 gemäß Fig. 1 und 2 integrierten Schaltmittels 37 mit einem durch die Bauelemente 22 der Splittereinrichtung 20 bereitgestellten Splitter 41 und dem ebenfalls in die Splittereinrichtung 20 integrierten Signalabgriffsmittel 32.

In der Verschaltungsmöglichkeit gemäß Fig. 8 sind an die Eingänge der Schalter 1 und 2 des Schaltmittels 37 die a-Ader (Tip) sowie die b-Ader (Ring) des niederfrequenten Sprachsignals (VOICE/POTS/ISDN) angeschlossen. Ausgänge der Schalter 1 und 2 mit diesen Signalen werden dem Splitter 41 zugeführt. Die Ausgänge der Schalter 1 und 2 mit der a-Ader sowie b-Ader des niederfrequenten Sprachsignals sind gemäß Fig. 8 weiterhin mit den von links gesehen beiden ersten Kontaktpins 33 des Signalabgriffsmittels 32 verschaltet. Analog wird mit der a-Ader sowie der b-Ader des hochfrequenten Datensignals (DSLAM/DATA) verfahren. Die a-Ader sowie b-Ader des hochfrequenten Datensignals werden den Eingängen der Schalter 3 und 4 zugeführt. An den Ausgängen der Schalter 3 und 4 des Schaltmittels 37 werden diese Signale bereitgehalten und einerseits dem Splitter 41 als Eingangssignale und andererseits den von links gesehen fünften und sechsten Kontaktpins 33 des Signalabgriffsmittels 32 zugeführt. Der Splitter 41 erzeugt aus dem niederfrequenten Sprachsignal (VOICE/POTS/ISDN) und dem hochfrequenten Datensignal (DSLAM/DATA) ein kombiniertes Sprach-Datensignal (LINE), wobei dieses LI-NE-Signal einerseits Eingängen der Schalter 5 und 6 des Schaltmittels 37 und andererseits unmittelbar den von links gesehen dritten und vierten Kontaktpins 33 des Signalabgriffsmittels 32 zugeführt wird. An den beiden verbleibenden Kontaktpins 33 des Signalabgriffsmittels wird das Massepotential bzw. Erdpotential (SHIELD) angelegt.

Bei dieser Verschaltungsmöglichkeit gemäß Fig. 8 sind durch selektives Schalten der einzelnen Schalter 1 bis 8 des Schaltmittels 37 einzelne Signale bzw. Telekommunikationsdienste selektiv zuschaltbar, abschaltbar bzw. durchschaltbar. Aus einem Abgleich zwischen den an den Schaltern 1 bis 8 des Schaltmittels 37 vorgenommenen Schaltungen und den an den Kontaktpins 33 des Signalabgriffsmittels 32 auslesbaren Signalen lassen sich wiederum Rückschlüsse auf die ordnungsgemäße Funktionsweise der Splittereinrichtung ziehen. Wird zum Beispiel durch Öffnen des Schalters 1 das niederfrequente Stimmsignal dem Splitter 41 nicht mehr zugeführt, so muss sich das im Ausführungsbeispiel der Fig. 8 an zwei Kontaktpins 33 des Signalabgriffsmittels 32 auswirken, nämlich an dem von links gesehen ersten Kontaktpin 33 und an dem von links gesehen dritten Kontaktpin 33. Würde sich diese Änderung in den Signalen an den Kontaktpins 33 nicht einstellen, so kann hieraus auf eine Fehlfunktion der Splittereinrichtung 20 geschlossen werden. Durch derart gezieltes Beeinflussen der Schaltstellungen des Schaltmittels 37 und durch einen Vergleich der sich daraus ergebenden Signaländerungen an den Kontaktpins 33 des Signalabgriffsmittels 32 lässt sich die Funktionsweise und damit der ordnungsgemäße Betrieb der Splittereinrichtung 20 überprüfen.

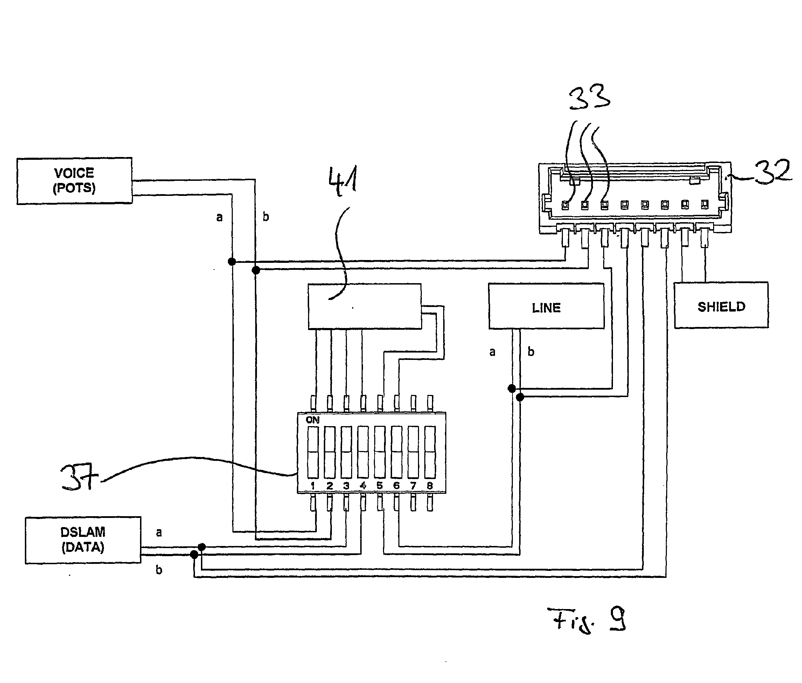

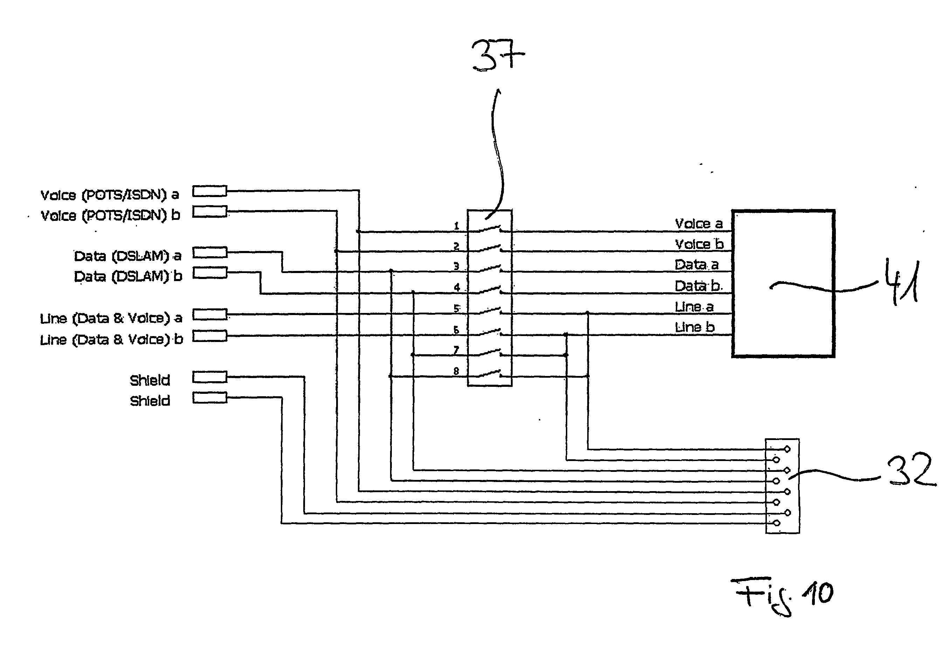

Weitere interne Verschaltungsmöglichkeiten zwischen Schaltmittel 37, Signalabgriffsmittel 32 und Splitter 41 für die erfindungsgemäße Splittereinrichtung 20 zeigen Fig. 9 und 10. Bereits an dieser Stelle sei darauf hingewiesen, dass es eine Vielzahl weiterer Verschaltungsmöglichkeiten für die in die Splittereinrichtung 20 integrierten Baugruppen gibt. Zur Gewährleistung einer kompakten Darstellung der Erfindung werden lediglich die in Fig. 8 bis 10 gezeigten Verschaltungsmöglichkeiten beschrieben. Dem hier angesprochenen Fachmann erschließen sich jedoch bei Studium der hier vorliegenden Erfindung unmittelbar weitere mögliche Verschaltungsmöglichkeiten.

Fig. 9 zeigt eine weitere interne Verschaltungsmöglichkeit. So ist bei der Verschaltungsmöglichkeit gemäß Fig. 9 die a-Ader sowie b-Ader des niederfrequenten Sprachsignals (VOICE/POTS/ISDN) einerseits an die Eingänge der Schalter 1 und 2 des Schaltmittels 37 und andererseits unmittelbar an die von links gesehen beiden ersten Kontaktpins 33 des Signalabgriffsmittels 32 angelegt. Die a-Ader sowie b-Ader des hochfrequenten Datensignals (DSLAM/DATA) sind einerseits an die Eingänge der Schalter 3 und 4 des Schaltmittel 37 und andererseits unmittelbar an die von links gesehen fünften und sechsten Kontaktpins 33 des Signalabgriffsmittels 32 angelegt. Die an die Eingänge der Schalter 1 bis 4 angelegten Adern von niederfrequentem Sprachsignal sowie hochfrequentem Datensignal werden je nach Stellung der Schalter 1 bis 4 dem Splitter 41 als Eingangssignal zugeführt, der hieraus ein kombiniertes Stimm- und Datensignal (LINE) erzeugt. Dieses wird an Eingänge der Schalter 5 und 6 des Schaltmittels 37 angelegt, wobei nach Durchlaufen der Schalter 5 und 6 das kombinierte Sprach- und Datensignal an die von links gesehen dritten und vierten Kontaktpins 33 des Signalabgriffsmittels 32 angelegt wird. An die beiden verbleibenden Kontaktpins 33 des Signalabgriffsmittels 32 ist wiederum das Massepotential bzw. Erdpotential (SHIELD) angelegt. Auch bei dieser möglichen Verschaltung von Splitter 41, Schaltmittel 37 und Signalabgriffsmittel 32 sind durch gezieltes Beeinflussen der Schaltstellungen der Schalter 1 bis 8 des Schaltmittels 37 einzelne Dienste individuell zuschaltbar sowie abschaltbar. Durch einen Abgleich zwischen den vorgenommenen Schaltungen an den Schaltern 1 bis 8 und den sich dadurch ergebenden Signaländerungen an den Kontaktpins 33 des Signalabgriffsmittels 32 lassen sich wiederum Rückschlüsse auf die korrekte Funktionsweise der Splittereinrichtung ziehen.

Fig. 10 zeigt eine weitere interne Verschaltungsmöglichkeit von Splitter 41, Schaltmittel 37 und Signalabgriffsmittel 32. Aus Gründen einer einfacheren Darstellung wurden in Fig. 10 für das Schaltmittel 37 sowie das Signalabgriffsmittel 32 vereinfachte Ersatzschaltbilder gewählt. Die Besonderheit der Verschaltungsmöglichkeit gemäß Fig. 10 ergibt sich aus der Beschaltung der Schalter 7 und 8 des Schaltmittels 37, wobei an die Eingänge der Schalter 7 und 8 einerseits a-Ader und b-Ader des hochfrequenten Datensignals (DATA/DSLAM) und an die Ausgänge der Schalter 7 und 8 a-Ader sowie b-Ader des kombinierten Sprach- und Datensignals (LINE) angeschlossen sind. Hierdurch wird das hochfrequente Datensignal direkt auf LINE geschaltet und somit der Splitter überbrückt. Insbesondere wird bei geöffneten Schaltern 1 bis 6 und geschlossenen Schaltern 7 und 8 des Schaltmittels 37 die Splittereinrichtung 20 als "Durchschaltemodul" genutzt und zwar derart, dass die niederfrequenten Sprachsignale abgeschaltet werden können und somit die hochfrequenten Datensignale direkt am LINE-Anschluß zur Verfügung stehen. Dies ist dann von Vorteil, wenn beispielsweise von einer splittergebundenen asymmetrischen Übertragungsart auf eine symmetrische Übertragungsart (z.B. SDSL) geschaltet werden soll (reiner Datenbetrieb). Vorteil dieser Methode ist, dass weder ein sogenanntes "Jumper-Kabel" vom Datenanschluß zum Lineanschluß gelegt werden muss, noch dass das Sprachsignal am Voiceanschluß abgeklemmt werden muss. Letzteres würde beispielsweise bei der symmetrischen Übertragungsart Störungen verursachen.

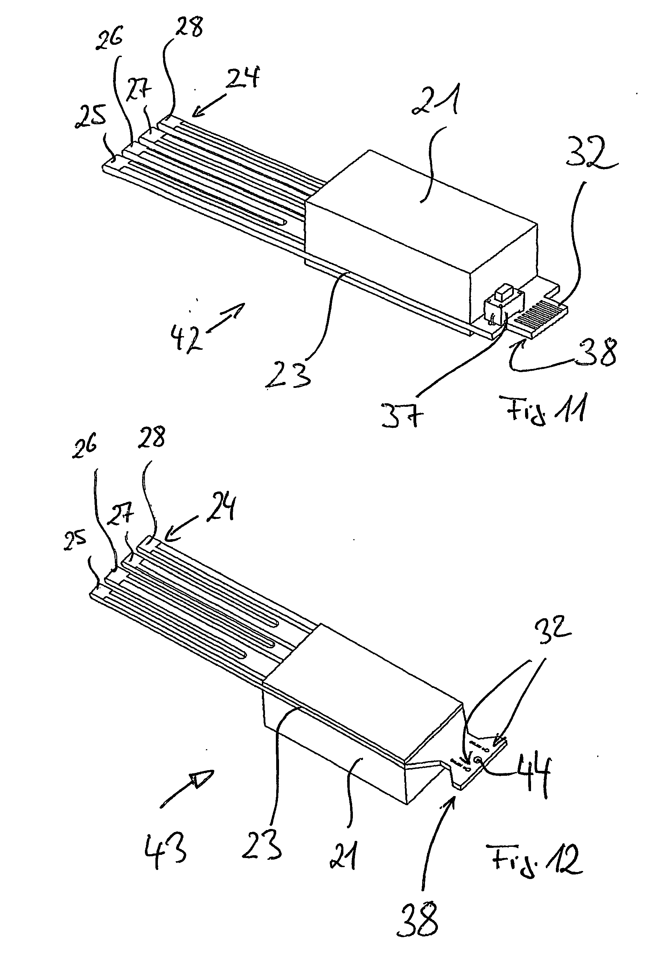

Fig. 11 bis 14 zeigen weitere erfindungsgemäße Ausführungsbeispiele von Splittereinrichtungen im Sinne der hier vorliegenden Erfindung. Die in Fig. 11 bis 15 gezeigten Splittereinrichtungen unterscheiden sich von der Splittereinrichtung gemäß Fig. 1 und 2 durch die konkrete Ausgestaltung der in die Splittereinrichtungen integrierten Signalabgriffsmittel sowie Schaltmittel, bzw. dadurch, dass kein Schaltmittel in die Splittereinrichtung integriert ist. Ansonsten stimmen die Splittereinrichtungen gemäß Fig. 11 bis 14 jedoch mit der Splittereinrichtung 20 gemäß Fig. 1 bis 2 überein. Für gleiche Baugruppen werden daher zur Vermeidung unnötiger Wiederholungen gleiche Bezugsziffern verwendet.

Bei der Splittereinrichtung 42 gemäß Fig. 11 ist in dieselbe wiederum ein Schaltmittel 37 sowie ein Signalabgriffsmittel 32 integriert. Im Unterschied zum Ausführungsbeispiel gemäß Fig. 1 und 2 ist bei der Splittereinrichtung 42 gemäß Fig. 12 das Signalabgriffsmittel 32 nicht als Buchse einer Steckereinrichtung ausgebildet, sondern vielmehr als ein Band von nebeneinander angeordneten Kontaktpads. Das Schaltmittel 37 ist nicht als DIP-Schalter ausgeführt, sondern als sogenannter Tasterschalter. Der Tasterschalter kann dabei zwei oder auch mehrere Schaltstellungen aufweisen. Auch mit der in Fig. 11 gezeigten Splittereinrichtung 42 lassen sich ebenso wie mit der Splittereinrichtung 20 gemäß Fig. 1 und 2 einzelne Dienste bzw. Signale gezielt beeinflussen, nämlich entweder Zuschalten oder Abschalten oder auch Durchschalten. Die Dienste bzw. Signale sind am Signalabgriffsmittel 32 auslesbar und einer nicht-dargestellten Auswerteeinrichtung zu Testzwecken bzw. zu Überprüfungen zuführbar.

Fig. 12 zeigt eine Splittereinrichtung 43 mit in die Splittereinrichtung 43 integrierten Signalabgriffsmittein 32, die im Ausführungsbeispiel der Fig. 12 als Durchkontakte ausgebildet sind, in die zum Auslesen der Signale zum Beispiel eine Messspitze eines Messgeräts eingesteckt werden kann. Im Ausführungsbeispiel der Fig. 12 sind lediglich zwei derartige Durchkontakte vorhanden. Das zwischen den beiden Durchkontakten angeordnete Loch 44 dient dem Ergreifen der Splittereinrichtung 43 zum erleichterten Herausziehen derselben aus einem Funktionselement einer Verteilerleiste eines Verteilerblocks.

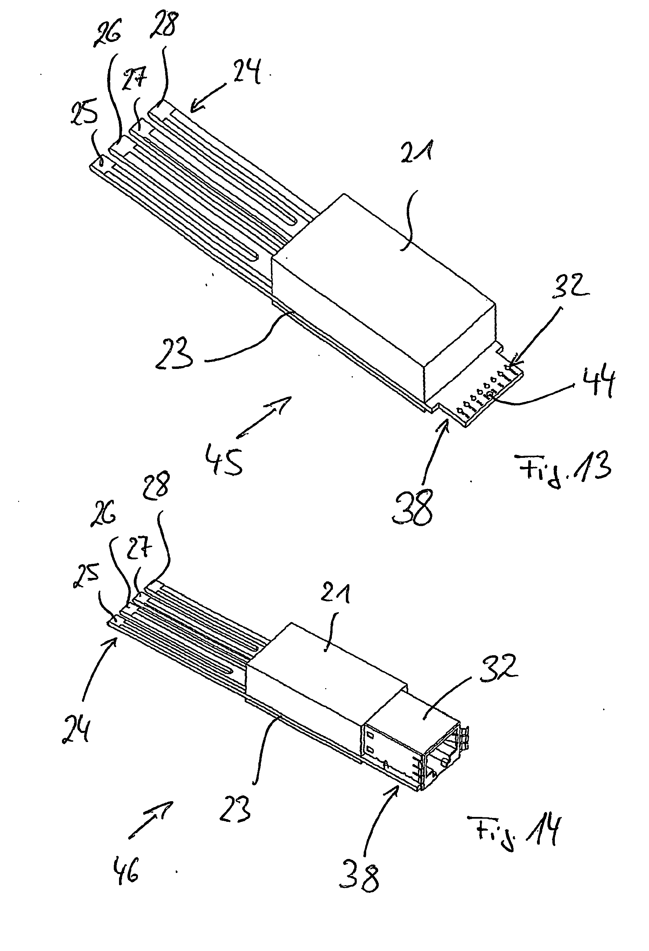

Das Ausführungsbeispiel gemäß Fig. 13 entspricht im wesentlichen dem Ausführungsbeispiel gemäß Fig. 12, wobei jedoch im Ausführungsbeispiel der Fig. 13 insgesamt acht Durchkontakte in die Platine 23 der Splittereinrichtung 45 integriert sind. Ein ebenfalls in die Platine 23 integriertes Loch 44 dient wiederum dem leichteren Ergreifen der Splittereinrichtung 45 beim Herausziehen derselben aus einem Funktionselement.

Bei den in Fig. 12 und 13 gezeigten Ausführungsbeispielen einer Splittereinrichtung 43 bzw. 45 sind keine Schaltmittel zum gezielten Zuschalten, Abschalten bzw. Durchschalten einzelner Dienste bzw. Signale gezeigt. Es ist jedoch denkbar, auch bei den Splittereinrichtungen 43 sowie 45 gemäß Fig. 12 und 13 als DIP-Schalter oder Tasterschalter ausgebildete Schaltmittel vorzusehen. Den als DIP-Schaltern gemäß dem Ausführungsbeispiel nach Fig. 1 und 2 und den als Tasterschaltern gemäß den Ausführungsbeispiel nach Fig. 11 ausgebildeten Schaltmitteln 37 ist gemeinsam, dass diese von einer Bedienperson betätigbar sind, die vor Ort die Schaltstellung der Schaltmittel 37 beeinflusst.

Im Sinne der hier vorliegenden Erfindung ist es auch möglich, die Schaltmittel 37 als fernsteuerbare Schaltmittel auszuführen und zusammen mit den Baugruppen 22, welche den Splitter 41 der Splittereinrichtung bilden, in das Gehäuse 21 zu integrieren. Bei derartigen fernsteuerbaren Schaltmitteln kann es sich zum Beispiel um Relais handeln, wobei die Schaltstellung der Relais über Steuersignale beeinflusst werden kann, die über die selbe Kupferdoppelader übertragen werden, wie die hochfrequenten Datensignale sowie niederfrequenten Sprachsignale. Die Steuersignale für die fernsteuerbaren Relais werden im Modulationsverfahren den Datensignalen bzw. den Sprachsignalen überlagert.

Bei den Steuersignalen kann es sich zum Beispiel um Spannungspulse handeln, mithilfe derer die fernsteuerbaren Relais geöffnet bzw. geschlossen werden können. Eine Ausführung der Schaltmittel als fernsteuerbare Schaltmittel hat den Vorteil, dass zur Durchführung von Test- und Prüfvorgängen keine Bedienperson mehr vor Ort Beeinflussungen an der Splittereinrichtungen vornehmen muss. Vielmehr kann dies von jedem beliebigen Ort aus erfolgen.

Fig. 14 zeigt ein weiteres Ausführungsbeispiel einer erfindungsgemäßen Splittereinrichtung 46. Bei dem Ausführungsbeispiel gemäß Fig. 14 ist wiederum ein Signalabgriffsmittel 32 in die Splittereinrichtung integriert, wobei das Signalabgriffsmittel 32 in RJ-Steckertechnik ausgeführt ist. Es kann zum Beispiel ein RJ11- oder auch RJ45-Stecker verwendet werden. In das Gehäuse 21 können wiederum fernsteuerbare Schaltmittel integriert sein.

Im Sinne der hier vorliegenden Erfindung werden demnach Splittereinrichtungen vorgeschlagen, in welche Signalabgriffsmittel integriert sind. Mithilfe der Signalabgriffsmittel lassen sich an der Splittereinrichtung anliegende Signale bzw. Telekommunikationsdienste auch dann auslesen, wenn die Splittereinrichtung von vorne in ein Funktionselement bzw. in die Kontaktfedern des Funktionselements eingeschoben ist. Eine derartige Splittereinrichtung muss zum Auslesen der Signale und zur Durchführung von Test- und Prüfvorgängen demnach nicht mehr aus dem Funktionselement heraus gezogen werden. Test- und Prüfvorgänge sind auch im Betrieb der Splittereinrichtung durchführbar. Besonders bevorzugt ist eine Ausführungsform, in welcher neben der Signalabgriffsmitteln auch Schaltmittel in die Splittereinrichtung integriert sind. Mithilfe der Schaltmittel können einzelne Dienste zugeschaltet, abgeschaltet oder durchgeschaltet werden. In Kombination mit den Signalabgriffsmitteln wird dann ein Zugriff auf durch die Schaltmittel beeinflusste oder auch nicht nichtbeeinflusste Signale gewährleistet.

### Bezugszeichenliste

- 20: Splittereinrichtung
- 21: Gehäuse
- 22: Bauelemente
- 23: Platine
- 24: Ende
- 25: Kontaktzunge
- 26: Kontaktzunge
- 27: Kontaktzunge
- 28: Kontaktzunge
- 29: Verteilerblock
- 30: Verteilerleiste
- 31: Schneidklemme
- 32: Signalabgriffsmittel
- 33: Kontaktpin
- 34: Anschluss
- 35: Stecker
- 36: Kabel
- 37: Schaltmittel
- 38: Ende
- 39: Einzelschalter
- 40: Kontaktfuß
- 41: Splitter
- 42: Splittereinrichtung
- 43: Splittereinrichtung
- 44: Loch
- 45: Splittereinrichtung
- 46: Splittereinrichtung

## Patentansprüche

1. Splittereinrichtung für eine Verteilereinrichtung einer Telekommunikationsanlage, wobei die Splittereinrichtung mindestens einen Splitter (41) aufweist und in die Verteilereinrichtung einsteckbar ist, und wobei in die Splittereinrichtung mindestens ein Signalabgriffsmittel (32) integriert ist, um an dem oder jedem Splitter (41) anliegende Signale abzugreifen, **dadurch gekennzeichnet, dass** in die Splittereinrichtung zusätzlich mindestens ein Schaltmittel (37) integriert ist, um an dem oder jedem Splitter anliegende Signale zuzuschalten und/oder abzuschalten und/oder durchzuschalten.

2. Splittereinrichtung nach Anspruch 1, **dadurch gekennzeichnet, dass** das oder jedes Schaltmittel (37) fernsteuerbar ausgebildet ist.

3. Splittereinrichtung nach Anspruch 1 oder 2, **dadurch gekennzeichnet, dass** dieselbe in mindestens ein Funktionselement einer Verteilerleiste (30) der Verteilereinrichtung einsteckbar ist, wobei dann, wenn dieselbe in mehrere Funktionselemente einsteckbar ist, für jedes Funktionselement ein Splitter in die Splittereinrichtung integriert ist.

4. Splittereinrichtung nach Anspruch 3, **dadurch gekennzeichnet, dass** dann, wenn dieselbe in mehrere Funktionselemente einsteckbar ist, für jedes Funktionselement ein Signalabgriffsmittel in die Splittereinrichtung integriert ist.

5. Splittereinrichtung nach Anspruch 3 oder 4, **dadurch gekennzeichnet, dass** dieselbe mit Kontaktzungen (25, 26, 27, 28) zwischen Kontaktfedern mindestens eines Funktionselements der Verteilerleiste (30) vorzugsweise von vorne einsteckbar ist.

6. Splittereinrichtung nach einem oder mehreren der Ansprüche 1 bis 5, **dadurch gekennzeichnet, dass** mit Hilfe des oder jeden Signalabgriffsmittels (32) die an dem oder jedem Splitter anliegenden Signale bei von vorne in die Verteilereinrichtung eingesteckter Splittereinrichtung abgreifbar sind.

7. Sptittereinnchtung nach einem oder mehreren des Ansprüche 1 bis 6, **dadurch gekennzeichnet, dass** dieselbe in mindestens ein Funktionselement einer Verteilerleiste (30) der Verteilereinrichtung von vorne einsteckbar ist.

## Claims

1. Splitter device for a distributor device for a telecommunications installation, wherein the splitter device has at least one splitter (41) and can be plugged into the distributor device, and wherein at least one single tapping means (32) is integrated in the splitter device in order to tap off signals which are present at the or each splitter (41), **characterized in that** at least one switching means (37) is additionally integrated in the splitter device in order to connect and/or to disconnect and/or to pass on signals which are present at the or each splitter.

2. Splitter device according to Claim 1, **characterized in that** the or each switching means (37) is designed to be remotely controllable.

3. Splitter device according to Claim 1 or 2, **characterized in that** the splitter device can be plugged into at least one functional element of a distribution block (30) of the distributor device, wherein, when the splitter device can be plugged into a plurality of functional elements, one splitter is integrated in the splitter device for each functional element.

4. Splitter device according to Claim 3, **characterized in that**, when the splitter device can be plugged into a plurality of functional elements, a signal tapping means is integrated in the splitter device for each functional element.

5. Splitter device according to Claim 3 or 4, **characterized in that** the splitter device has contact tongues (25, 26, 27, 28) which can be plugged in, preferably from the front, between contact springs of at least one functional element of the distribution block (30).

6. Splitter device according to one of more of Claims 1 to 5, **characterized in that** the signals which are present at the or each splitter can be tapped off with the aid of the or each signal tapping means (32) when the splitter device has been plugged into the distributor device from the front.

7. Splitter device according to one or more of Claims 1 to 6, **characterized in that** the splitter device can be plugged into at least one functional element of a distribution block (30) of the distributor device from the front.

## Revendications

1. Dispositif de séparation pour un répartiteur d'un équipement de télécommunication, le dispositif de séparation présentant au moins un séparateur (41) et pouvant être inséré dans le répartiteur et au moins un moyen de prélèvement de signal (32) étant intégré dans le dispositif de séparation afin de prélever les signaux présents sur le ou sur chaque séparateur (41), **caractérisé en ce qu'**au moins un moyen de commutation (37) est en plus intégré dans le dispositif de séparation pour connecter et/ou déconnecter et/ou transférer les signaux présents sur le ou sur chaque séparateur.

2. Dispositif de séparation selon la revendication 1, **caractérisé en ce que** le ou chaque moyen de commutation (37) est configuré pour pouvoir être commandé à distance.

3. Dispositif de séparation selon la revendication 1 ou 2, **caractérisé en ce que** celui-ci peut être inséré dans au moins un élément fonctionnel d'une barrette de répartition (30) du répartiteur, un séparateur étant alors intégré dans le dispositif de séparation pour chaque élément fonctionnel lorsque celui-ci peut être inséré dans plusieurs éléments fonctionnels.

4. Dispositif de séparation selon la revendication 3, **caractérisé en ce que** lorsque celui-ci peut être inséré dans plusieurs éléments fonctionnels, un moyen de prélèvement de signal est alors intégré dans le dispositif de séparation pour chaque élément fonctionnel.

5. Dispositif de séparation selon la revendication 3 ou 4, **caractérisé en ce que** celui-ci peut être inséré de préférence par l'avant avec des languettes de contact (25, 26, 27, 28) entre les ressorts de contact d'au moins un élément fonctionnel de la barrette de répartition (30).

6. Dispositif de séparation selon l'une ou plusieurs des revendications 1 à 5, **caractérisé en ce que** les signaux présents sur le ou sur chaque séparateur peuvent être prélevés à l'aide du ou de chaque moyen de prélèvement de signal (32) lorsque le dispositif de séparation est inséré par l'avant dans le répartiteur.

7. Dispositif de séparation selon l'une ou plusieurs des revendications 1 à 6, **caractérisé en ce que** celui-ci peut être inséré par l'avant dans au moins un élément fonctionnel d'une barrette de répartition (30) du répartiteur.
